# EUROPEAN PATENT SPECIFICATION

(11) **EP 3 170 389 B1**
(45) Date of publication and mention of the grant of the patent: **29.04.2020**
(21) Application number: 14897595.6
(22) Date of filing: 14.07.2014
(51) Int. Cl.: A01K 89/01, A01K 89/015

(54) **FISHING REEL**
ANGELROLLE
MOULINET DE PÈCHE

(43) Date of publication of application: 24.05.2017
(73) Proprietor: Globeride, Inc., Higashikurume-shi Tokyo 203-8511 (JP)
(72) Inventor: SHIMIZU, Yoshihito, Higashikurume-shi Tokyo 203-8511 (JP)
(74) Representative: Boult Wade Tennant LLP
(86) International application number: PCT/JP2014/068712
(87) International publication number: WO 2016/009475

(56) References cited:
- EP-A1- 2 210 487
- JP-A- H02 177 838
- JP-A- H08 172 986
- JP-A- S61 274 638
- JP-A- S61 274 638
- US-A- 4 591 108

## Description

### TECHNICAL FIELD

The present invention relates to a fishing reel.

### BACKGROUND

In the fishing reel of Patent Literature 1, cited below, a clutch lever provided on a reel body is rotationally operated for switching between the state where rotation of a spool shaft is restricted and the state where rotation of the spool shaft is permitted. In addition, the clutch lever is fixed on an end portion of a shaft member rotatably supported by the reel body and projecting from the reel body.

The fixing structure between the clutch lever and the shaft member is as follows. The shaft member has a non-circular shaft portion that is fitted in a non-circular fitting portion provided in the clutch lever. A fastener such as a screw or a bolt is screwed in an end surface of the shaft portion in the axial direction to squeeze the clutch lever so as not to be removed from the shaft portion.

Patent Literature 2, cited below, discloses a reverse rotation preventing mechanism for a fishing reel. The reverse rotation preventing mechanism includes a one-way clutch and a switching mechanism configured to switch the one-way clutch between an engaged state (reverse rotation prohibited) and a disengaged state (reverse rotation allowed). The functioning or design of the switching mechanism is not explained in Patent Literature 2. The features in the pre-characterizing portion of claim 1 are disclosed in Patent Literature 2.

Patent Literature 3, cited below, discloses a dragging device for a spinning reel. The second drag mechanism of the dragging device comprises a non rotating support shaft inside a rotary member, third dragging members support on the outer periphery of the support shaft and fourth dragging members supported on the inner periphery of the rotary member. A liver-like-shaped control is projection radially outwardly of support cylinder 15. By pressing the liver-like-shaped control the third and fourth dragging members are pressed together.

The clutch lever will be hereinafter referred to as a moving member.

### RELEVANT REFERENCES

### PATENT LITERATURE

Patent Literature 1: Japanese Patent Application Publication No. Sho 61-274638;
Patent Literature 2: European Patent Application Publication No. 2.2104.87 A1;
Patent Literature 3: US Patent No. 4,591,108.

### SUMMARY

### PROBLEMS TO BE SOLVED BY THE INVENTION

With the above fixing structure, there is a gap between the shaft portion and the fitting portion fitted together due to a fitting tolerance or the like, causing wobble of the moving members fixed on the shaft member.

In addition, the direction of rotation of the moving members is the same as the direction of rotation of the fasteners about the axis thereof. Therefore, when the moving members are repeatedly rotated while wobbling with respect to the shaft member, the fasteners screwed into the end surface of the shaft portion may possibly be loosened.

The present invention is intended to overcome the above problem, and one object thereof is to provide a fishing reel wherein the wobble of the moving members is reduced and loosening of the fasteners is prevented.

### MEANS FOR SOLVING THE PROBLEM

To solve the above problem, the present invention provides a fishing reel according to claim 1.

In the above invention, the fastener squeezes the shaft portion and the fitting portion in a direction orthogonal to the shaft member. Therefore, the shaft portion and the fitting portion can be fastened and fixed together tightly with no gap therebetween, and the moving member is less prone to wobble. In addition, the direction of rotation of the fastener about the axis thereof is not the same as the direction of rotational operation of the moving member. Therefore, it is less possible that repeated rotational operation of the moving member causes the fastener to be loosened. Further, since the fastener is less prone to be loosened, the tight fastening between the shaft portion and the fitting portion can be maintained. Therefore, the moving member is less prone to wobble even after the moving member is rotated repeatedly for a long period.

According to the above arrangement, the outer peripheral surface of the shaft portion and the inner peripheral surface of the fitting portion engage with each other, and the moving member is less prone to wobble in the direction of rotation.

Further, in the above invention, the fastener threadably engages with the shaft portion.

According to the above arrangement, the shaft portion is moved in the axial direction (toward the fastener) and fastened and fixed tightly together with the fitting portion, and thus the moving member is less prone to wobble.

### ADVANTAGES

According to the present invention, there is less possibility of wobble of the moving members, and thus the moving members can be rotated smoothly. Therefore, the operability of the moving members can be increased, resulting in a higher catch of fish.

Further, according to the present invention, there is less possibility of loosening of the moving members, and thus tightening of the loosened fasteners is unnecessary, resulting in simple maintenance of the fishing reel.

### BRIEF DESCRIPTION OF THE DRAWINGS

Fig. 1 illustrates a fishing reel according to an embodiment of the invention.
Fig. 2 is a rear view of the fishing reel according to the invention showing a clutch lever in an enlarged scale.
Fig. 3 is an exploded perspective view of a part of the switching mechanism comprised in a fishing reel according to the invention.

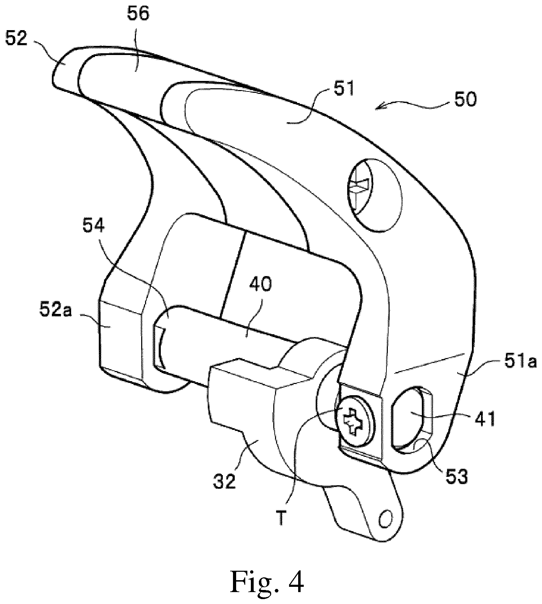

Fig. 4 is a perspective view of a part of the switching mechanism comprised in a fishing reel according to the invention.
Fig. 5 is an enlarged right side view of the vicinity of the clutch lever comprised in a fishing reel according to the invention. as viewed from the right side.
Fig. 6 is a side view of the clutch lever and a spindle according to a non-claimed embodiment.
Fig. 7 is an exploded perspective view of a part of the switching mechanism according to a non-claimed embodiment.

### DESCRIPTION OF EXAMPLE EMBODIMENTS

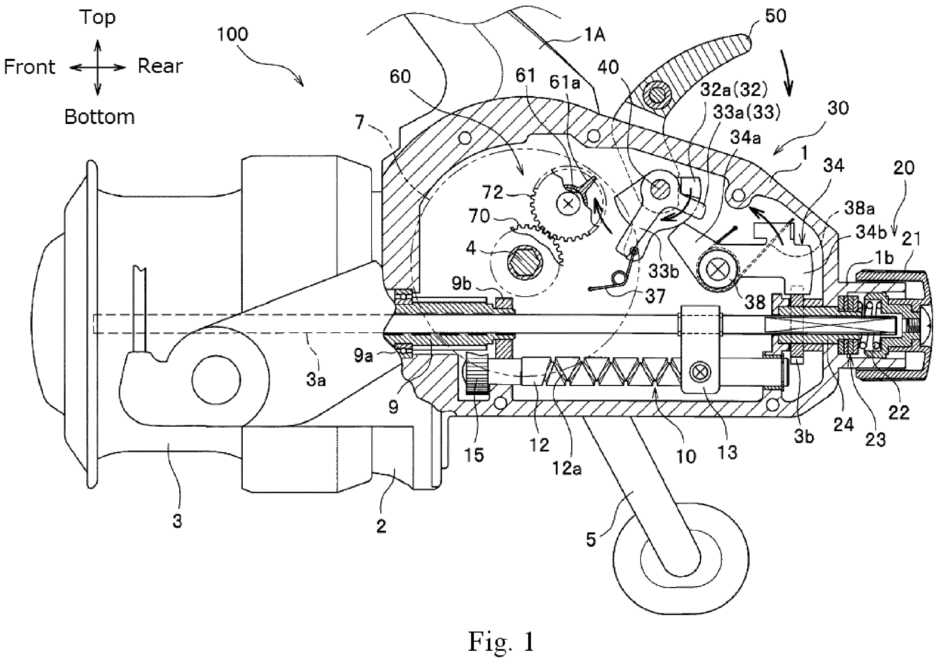

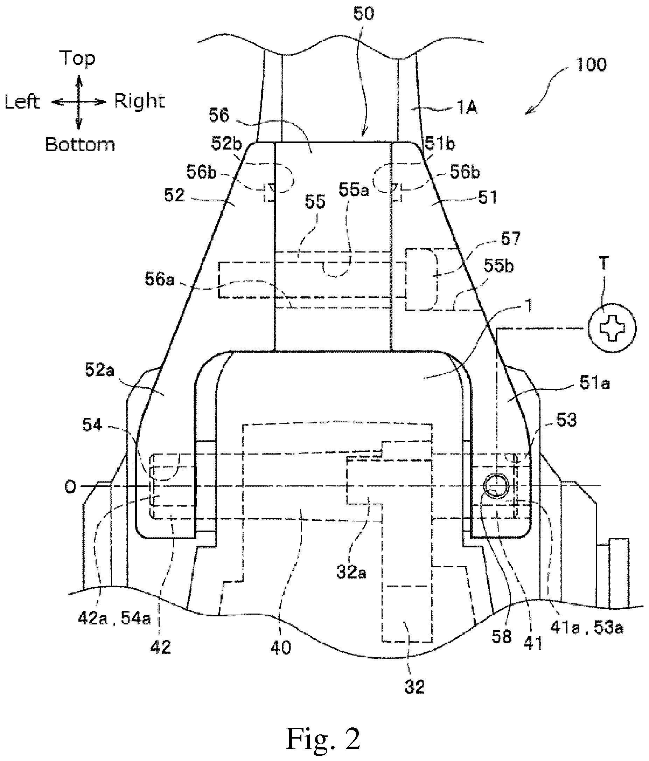

Next, an embodiment of the present disclosure will now be described with reference to the attached drawings. As used herein, "front-rear" and "top-bottom" directions refer to the directions shown in Fig. 1, and "left-right" direction refer to the direction shown in Fig. 2.

As shown in Fig. 1, the spinning reel 100 includes a reel body 1 provided with a reel leg 1A to be mounted on a fishing rod, a rotor 2 rotatably supported by the reel body 1 and provided with a fishing line guide (not shown), and a spool 3 supported by the reel body 1 so as to be capable of moving in the front-rear direction and configured to have a fishing line wound thereon.

The reel body 1 may rotatably support a handle shaft 4. An end of the handle shaft 4 may project outside of the reel body 1, and a handle 5 is mounted on the end of the handle shaft 4. The reel body 1 may accommodate a wind driving mechanism. The wind driving mechanism may include a drive gear 7 having internal teeth to be engaged with the handle shaft 4, and a pinion gear 9 configured to mesh with the drive gear 7.

The pinion gear 9 may be rotatably supported by the reel body 1 via bearings 9a, 9b and connected to the rotor 2 so as to rotate integrally with the rotor 2. The pinion gear 9 may have a cavity formed therein and extending in the axial direction (the front-rear direction), and a spool shaft 3a may be inserted through the cavity.

The spool shaft 3a may be supported by the pinion gear 9 so as to be rotatable and movable in the front-rear direction, and the spool 3 may be mounted on the front portion of the spool shaft 3a. On the other hand, to the rear portion of the spool shaft 3a, there is connected an oscillating mechanism 10 configured to oscillate the spool 3 in the front-rear direction.

The oscillating mechanism 10 may include a worm shaft 12 rotatably installed in the reel body 1 and extending in parallel with the spool shaft 3a, and a slider 13 engaged with the spool shaft 3a so as to be rotatable and immovable in the axial direction. On the front portion of the worm shaft 12, there may be provided an interlocking gear 15 that meshes with the pinion gear 9. When the handle 5 is rotationally operated, the worm shaft 12 may be rotationally driven via the drive gear 7, pinion gear 9, and the interlocking gear 15. The worm shaft 12 may have a spiral cam groove 12a formed in the outer peripheral surface thereof, and the cam groove 12a may be engaged with the engagement pin (not shown) retained by the slider 13. When the worm shaft 12 is rotationally driven, the spool shaft 3a (the spool 3) may be oscillated in the front-rear direction and the fishing line may be wound around the spool 3 evenly.

A publicly known drag mechanism may be provided between the spool 3 and the spool shaft 3a so as to provide a brake force (drag force) to the rotation of the spool 3. On the other hand, there may be provided a sub drag mechanism 20 behind the spool shaft 3a.

The sub drag mechanism 20 may include an adjusting screw 21 threadably engaged with an inner peripheral surface of a cylindrical portion 1b that projects from the rear end of the reel body 1, a compression coil spring 22 and a brake member 23 accommodated in the cylindrical portion 1b, and a collar 24 mounted around the spool shaft 3a and extending through the brake member 23. The portion of the spool shaft 3a inserted into the collar 24 may have a non-circular shape and may be unrotatably fitted in the collar 24 such that the brake force of the brake member 23 acts on the spool shaft 3a via the collar24. With the sub drag mechanism 20, an auxiliary brake force may act on the rotation of the spool 3 even in the state where the rotation of the spool shaft 3a is permitted.

In the reel body 1, there is provided a switching mechanism 30 for switching between the state where the rotation of the spool shaft 3a is restricted and the state where the rotation of the spool shaft 3a is permitted, and a return mechanism 60 configured to return the switching mechanism 30 from the state where the rotation of the spool shaft 3a is permitted to the state where it is restricted, by the winding operation of the handle 5.

The switching mechanism 30 includes a clutch lever (a moving member) 50 mounted on opposite sides of a spindle (a shaft member) 40 and capable of rotational operation, a moving plate 32 configured to rotate integrally with the spindle 40, a kicking plate 33 fitted around the spindle 40 so as to be rotatable, and a stopper member 34 that engages with one end of the kicking plate 33.

As shown in Fig. 2, the spindle 40 is a substantially cylindrical member extending in the left-right direction and is supported by the reel body 1 so as to be rotatable around the central axis O. The right end portion 41 and the left end portion 42 of the spindle 40 project outward in the left-right direction further than the reel body 1 and are fitted into a right fitting portion 53 and a left fitting portion 54 provided in the clutch lever 50, respectively. It should be noted that the right end portion 41 in the embodiment corresponds to "a shaft portion" recited in the claims.

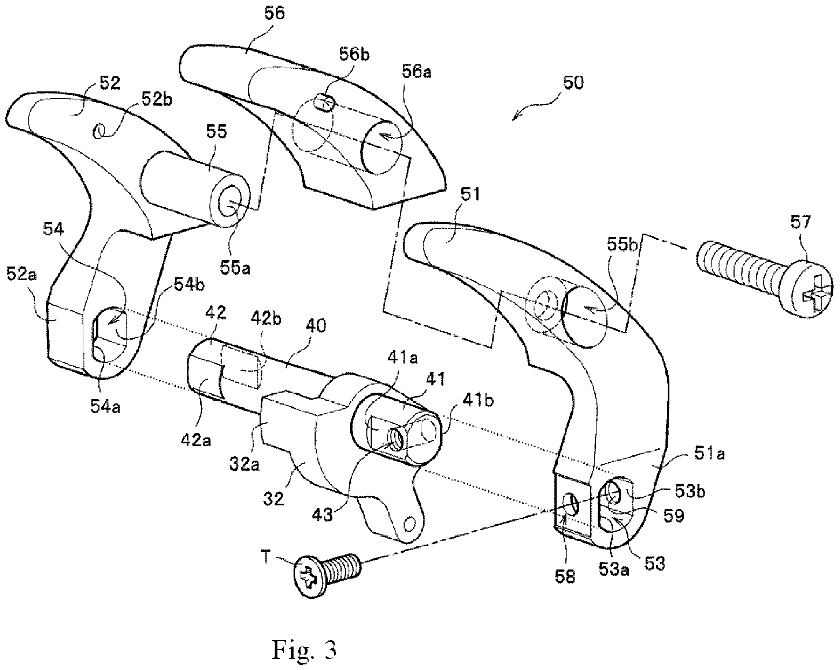

As shown in Fig. 2, the clutch lever 50 may include a right moving piece 51 and a left moving piece 52 arranged symmetrically, and a middle moving piece 56 retained between the right moving piece 51 and the left moving piece 52. As shown in Fig. 3, the left moving piece 52 may have a cylindrical connecting portion 55 that extends rightward from the right side surface of the left moving piece 52 and has an internal thread portion 55a formed in the inner peripheral surface thereof. A screw 57 penetrating the hole 55b formed in the right moving piece 51 may be screwed into the internal thread portion 55a of the connecting portion 55, such that the right moving piece 51 and the left moving piece 52 are integrated together. A circular cavity 51b may be formed in the left side surface of the right moving piece 51 above the hole 55b. Another circular cavity 52b may be formed in the right side surface of the left moving piece 52 above the connecting portion 55.

The middle moving piece 56 may have a connecting hole 56a that extends therethrough in the left-right direction. The connecting portion 55 may be inserted through the connecting hole 56a, such that the middle moving piece 56 may not be removed from between the right moving piece 51 and the left moving piece 52. Further, the middle moving piece 56 may have, on the left side surface and the right side surface thereof, circular projections 56b, 56b inserted into the hole 51b in the right moving piece 51 and the hole 52b in the left moving piece 52. Therefore, the middle moving piece 56 may be prohibited from rotating about the connecting portion 55 and fixed.

In the base portion 51a of the right moving piece 51, the right fitting portion 53 may extend through the base portion 51a in the left-right direction and may be fitted around the right end portion 41 of the spindle 40. On the other hand, in the base portion 52a of the left moving piece 52, the left fitting portion 54 may extend leftward from the right side surface of the base portion 52a to form a cavity and may be fitted around the left end portion 42 of the spindle 40. The right moving piece 51 and the left moving piece 52 may be integrated together with a screw 57 after the right fitting portion 53 and the left fitting portion 54 are fitted around the right end portion 41 and the left end portion 42 of the spindle 40, respectively. Thus, the opposite ends of the spindle 40 may be retained between the right moving piece 51 and the left moving piece 52, such that it is less possible that the clutch lever 50 should be separated from the spindle 40. It should be noted that the right fitting portion 53 in the embodiment corresponds to "a fitting portion" recited in the claims. The fixing structure between the clutch lever 50 and the spindle 40 will be described later in more detail.

As shown in Fig. 1, the kicking plate 33 may generally have an L-shape as viewed from a side, extending in two directions from the spindle 40 at the center. The kicking plate 33 may include a contact portion 33a and an engaging portion 33b. As shown in Figs. 1 and 3, the moving plate 32 may have a semicircular shape as viewed from a side and may include a wall portion 32a that contacts with the contact portion 33a of the kicking plate 33.

When the clutch lever 50 is rotated from the position shown in Fig. 1 in the direction of the arrow, the moving plate 32 rotates clockwise, and the wall portion 32a thereof presses the contact portion 33a of the kicking plate 33 to cause the kicking plate 33 to rotate clockwise. As a result, the contact portion 33a of the kicking plate 33 contacts with a contact portion 34a of the stopper member 34, and the engaging portion 33b is moved inside the rotational trajectory of a cam piece 61a of a kick member 61.

Around the center supporting region of the moving plate 32 and the kicking plate 33, there may be wounded a friction spring (not shown) that biases the contact portion 33a of the kicking plate 33 toward such a direction that the contact portion 33a is constantly contacted to the wall portion 32a of the moving plate 32. Further, the state of the moving plate 32 before the rotation and the state of the moving place 32 after the rotation may be retained by a switch spring 37 installed between the moving plate 32 and the reel body 1.

The stopper member 34 may generally have an L-shape as viewed from a side and may be supported pivotally so as to be rotatable around a spindle 38. The stopper member 34 may include, in one end thereof, the contact portion 34a to be contacted by the contact portion 33a. The stopper member 34 may include, in the other end thereof, an engaging/disengaging portion 34b. The engaging/disengaging portion 34b may be configured to engage with and disengage from a ratchet 3b that is unrotatably fixed around the collar 24.

The stopper member 34 may be biased by a spring 38a mounted on the spindle 38 such that the engaging/disengaging portion 34b engages with the ratchet 3b constantly. Therefore, when the clutch lever 50 is rotated clockwise in the direction of the arrow in Fig. 1, the moving plate 32 and the kicking plate 33 may also be rotated clockwise, and the contact portion 33a of the kicking plate 33 may press the contact portion 34a of the stopper member 34. The stopper member 34 may rotate counterclockwise against the biasing force of the spring 38a, the engaging/disengaging portion 34b may be disengaged from the ratchet 3b, and the rotation of the spool shaft 3a may be permitted.

The return mechanism 60 may include a gear 70 fixed on the handle shaft 4 and configured to rotate together with the handle shaft 4, a connecting gear 72 that meshes with the gear 70, and a kick member 61 configured to rotate in the same direction as the connecting gear 72. When the handle 5 is operated for winding, the kick member 61 may be rotated via the gear 70 and the connecting gear 72 and may contact with the engaging portion 33b of the kicking plate 33 moved inside the rotational trajectory of the cam piece 61a of the kick member 61.

When the kick member 61 rotates clockwise, the kicking plate 33 may rotate counterclockwise. Therefore, the contacting portion 33a of the kicking plate 33 may press the wall portion 32a of the moving plate 32, and the moving plate 32 may rotate counterclockwise to return the clutch lever 50 into the original position thereof. Since the contacting portion 33a of the kicking plate 33 no longer contacts with the contacting portion 34a of the stopper member 34, the stopper member 34 biased by the spring 38a may rotate clockwise. As a result, the engaging/disengaging portion 34b may engage with the ratchet 3b, and the rotation of the spool 3 may be restricted.

When the kick member 61 rotates counterclockwise, the kicking plate 33 may rotate clockwise about the spindle 40 against the biasing force of a friction spring (not shown). When the kick member 61 rotates further and the engaging portion 33b no longer contacts with the cam piece 61a, the kicking plate 33 may be rotated counterclockwise by the biasing force of the friction spring (not shown). The contacting portion 33a of the kicking plate 33 may contact with the wall portion 32a of the moving plate 32, and thus the kicking plate 33 may be stopped from rotating.

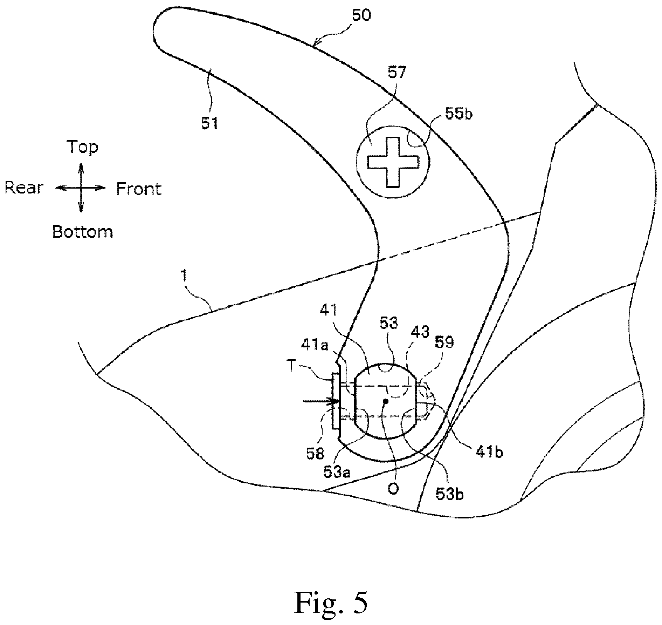

Next, the fixing structure between the clutch lever 50 and the spindle 40 will be described in detail. As shown in Figs. 3 and 5, the right end portion 41 of the spindle 40 has, in the outer peripheral surface thereof, flat surfaces 41a, 41b facing in opposite directions (the front-rear directions). Thus, the right end portion 41 has a generally flat oval shape as viewed from a side, that is, a non-circular shape. The left end portion 42 has, in the outer peripheral surface thereof, flat surfaces 42a, 42b facing in opposite directions. Thus, the left end portion 42 has a generally flat oval shape as viewed from a side, that is, a non-circular shape. Further, the right end portion 41 has an internal thread portion 43 that extends in the front-rear direction between the flat surfaces 42a, 42b.

As shown in Fig. 5, the right fitting portion 53 of the right moving piece 51 and the left fitting portion 54 of the left moving piece 52 have the same shapes as the right end portion 41 and the left end portion 42 of the spindle 40, that is, non-circular shapes. More specifically, the right fitting portion 53 has flat surfaces 53a, 53b facing the flat surfaces 41a, 41b, and the left fitting portion 54 has flat surfaces 54a, 54b facing the flat surfaces 42a, 42b. The right fitting portion 42 and the left fitting portion 54 have the same shapes as the right end portion 41 and the left end portion 42, but may be slightly larger than the right end portion 41 and the left end portion 42 because of the fitting tolerance. Therefore, when the right fitting portion 53 and the left fitting portion 54 are fitted around the right end portion 41 and the left end portion 42, respectively, a gap (not shown) may be produced between the inner peripheral surface of the right fitting portion 53 and the outer peripheral surface of the right end portion 41.

Further, the right moving piece 51 may have a through-hole 58 extending from the rear surface of the base portion 51a through the right fitting portion 53, and a fastener T inserted through the through-hole 58 may be threadably engaged with the internal thread portion 43 of the right end portion 41. Therefore, the right moving piece 51 may be squeezed by the head of the fastener T and thus fixed on the spindle 40 so as not to be removed. The end of the shaft of the fastener T may be accommodated in the hole 59 formed in the flat surface 53b of the right fitting portion 53.

The right moving piece 51 may be squeezed by the head of the fastener T toward the central axis O of the spindle 40 in the direction orthogonal to the axial direction of the spindle 40 (see the arrow in Fig. 5). Therefore, there may be no gap between the flat surface 41a of the spindle 40 and the flat surface 53a of the right moving piece 51, and the spindle 40 and the right moving piece 51 may be fastened together tightly. As a result, when the clutch lever 50 is rotationally operated, the flat surface 41a and the flat surface 53a may engage with each other without wobble of the clutch lever 50, and the spindle 40 may rotate smoothly.

The direction of screwing the fastener T into the internal thread portion 43 of the right end portion 41 is not the same as the direction of rotational operation of the clutch lever 50. Therefore, it may be less possible that the fastener T should be loosened due to the repeated rotational operation of the clutch lever 50. Since the fastener T is less prone to be loosened, the tight fastening between the flat surface 41a and the flat surface 53a may be maintained for a long period, and the clutch lever 50 may be less prone to wobble.

The left fitting portion 54 of the left moving piece 52 may be fitted and fixed on the left end portion 42 of the spindle 40. As shown in Figs. 2 and 3, the moving plate 32 that presses the contacting portion 33a of the kicking plate 33 may be provided on the right-hand portion of the spindle 40, and the load imparted to the left moving piece 52 is smaller than that imparted to the right moving piece 51. Therefore, the left moving piece 52 is less prone to wobble despite the small gaps between the flat surfaces 42a, 42b of the left end portion 42 and the flat surfaces 54a, 54b facing thereto.

As described above, in the spinning reel 100 according to the embodiment, the clutch lever 50 is less prone to wobble, and the clutch lever 50 can be rotated smoothly. Therefore, the operability of the clutch lever 50 can be increased, resulting in a higher catch of fish.

In addition, since the fastener T is less prone to be loosened, tightening of the loosened fastener T is unnecessary, resulting in simple maintenance of the spinning reel 100.

The present invention is not limited to the examples in the above description of the embodiment, but by the scope of the claims. The embodiment has been described as an example employing the fixing structure of the present invention for the spindle 40 and the clutch lever 50.

The fitting portion (the right fitting portion 53) of the embodiment, which includes a hole extending through the moving member (the clutch lever 50) in the left-right direction, may include a recess in the inner surface of the clutch lever 50 or a groove cut in a portion of the clutch lever 50.

In the embodiment, the fastener T is screwed into the shaft portion (the right end portion 41) of the spindle 40. In non-claimed embodiments, the fastener T may be screwed into the hole 59 in the right moving piece 51 such that the fastener T engages with the shaft portion (the right end portion 41) in the direction orthogonal to the axial direction of the spindle 40. In this case, the fastener T may squeeze the right moving piece 51 in the direction orthogonal to the shaft member (the spindle 40) such that the flat surfaces 41a, 41b are closer to each other. There may be no gap between the flat surface 41a of the right end portion 41 and the flat surface 53a of the right moving piece 51 and between the flat surface 41b of the right end portion 41 and the flat surface 53b of the right moving piece 51, and the spindle 40 and the right moving piece 51 may be fastened together tightly. As a result, when the clutch lever 50 is rotationally operated, the flat surfaces 41a, 41b and the flat surface 53a, 53b may engage with each other without wobble of the clutch lever 50, and the spindle 40 may rotate smoothly.

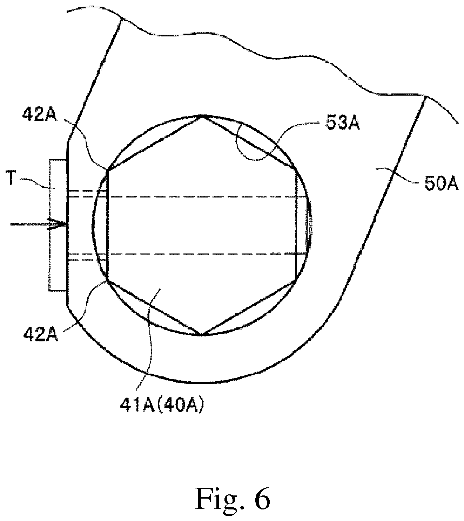

In the embodiment, both the shaft portion (the right end portion 41) and the fitting portion (the right fitting portion 53) have a non-circular shape. In non-claimed embodiments, as shown in Fig. 6, a right end portion 41A of a shaft member 40A may have a generally regular hexagonal shape as viewed from a side, and a right fitting portion 53A of a moving member 50A may have a generally circular shape as viewed from a side. With these shapes, two of the six corners 42A formed in the right end portion 41A may be firmly caught on the inner peripheral surface of the right fitting portion 53A that is squeezed by the head of the fastener T, so as to achieve the engagement. This arrangement may also reduce the wobble and allow smooth rotation of the moving member 50A, as in the embodiment.

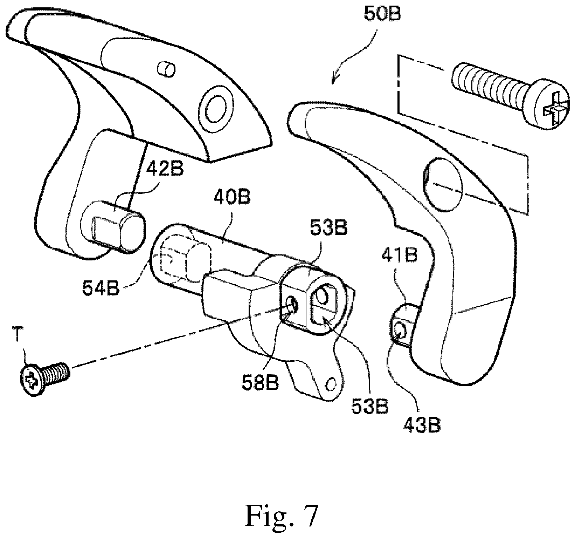

As shown in the non-claimed embodiment of Fig. 7, it may also be possible to provide the clutch lever 50B (the moving member) with shaft portions 41B, 42B and provide the end portion of the spindle 40 (the shaft member) with right fitting portions 53B, 54B. In this arrangement, the right fitting portion 53B of the spindle 40 may have a through-hole 58B penetrated by the fastener T, and the shaft portion 41B of the clutch lever 50B may have an internal thread portion 43B threadably engaged by the fastener T. This arrangement may also achieve the same advantages as in the embodiment.

### LIST OF REFERENCE NUMBERS

- 100: spinning reel
- 1: reel body
- 3a: spool shaft
- 4: handle shaft
- 7: drive gear
- 30: switching mechanism
- 32: moving plate
- 33: kicking plate
- 34: stopper member
- 40, 40A, 40B: spindles (shaft members)
- 41: right end portion (shaft portion)
- 42: left end portion
- 50, 50A, 50B: clutch lever (moving member)
- 53: right fitting portion (fitting portion)
- 54: left fitting portion
- 60: return mechanism
- T: fastener

## Claims

1. A spinning reel (100), comprising:
a spool (3) supported by a reel body (1) for winding a fishing line thereon, and a switching mechanism (30) for switching between the state where the rotation of the spool shaft (3a) is restricted and the state where the rotation of the spool shaft (3a) is permitted, the switching mechanism, comprising:
a shaft member (40,) extending in a left-right direction and supported by the reel body (1) so as to be rotatable around a shaft member central axis (O), the shaft member (40) having a right end portion (41) and a left end portion (42) which both project further than the reel body(1), in the left-right direction, and
a clutch lever (50) mounted on opposite end portions of the shaft member (40) and capable of rotational operation, having a right fitting portion (53) and a left fitting portion (54),
wherein the right end portion (41) and the left end portion (42) are fitted into the right fitting portion (53) and the left fitting portion (54), respectively
wherein the shaft member (40) is rotatable around the shaft central axis, for operating the switching mechanism, by rotational operation of the clutch lever (50);
a fastener (T) which penetrates one of the fitting portions (53,) and threadably engages with one of the end portions (41),
wherein an outer peripheral surface of the right end portion (41, 41A, 41B) has flat surfaces (41A, 41B) facing in opposite directions, and an outer peripheral surface of the left end portion (42) has flat surfaces (42A, 42B) facing in opposite directions, such that the right end portion and the left end portion have a generally non-circular shape as viewed from a side, both end portions engaging into a complementary shape of the respective fitting portions (53) and (54),
**characterized in that**
the fastener (T) extends in a direction orthogonal to the central axis (O) of the shaft member (40) and threadably engages with the end portion (41) of the shaft member (40) and squeezes, thereby fixing tightly together, the shaft portion and the fitting portion in a direction orthogonal to the shaft member central axis (O).

## Patentansprüche

1. Drehrolle (100), Folgendes umfassend:
eine von einem Rollenkörper (1) getragene Spule (3) zum Aufwickeln einer Angelschnur darauf, und einen Schaltmechanismus (30) zum Umschalten zwischen dem Zustand, in dem die Drehung des Spulenschafts (3a) eingeschränkt ist, und dem Zustand, in dem die Drehung des Spulenschafts (3a) zulässig ist, wobei der Schaltmechanismus Folgendes umfasst:
ein Schaftelement (40), das sich in einer Links-Rechts-Richtung erstreckt und von dem Rollenkörper (1) getragen wird, so dass es um eine Schaftelementmittelachse (O) drehbar ist, das Schaftelement (40) mit einem rechten Endabschnitt (41) und einem linken Endabschnitt (42), die beide weiter als der Rollenkörper (I) in der Links-Rechts-Richtung überstehen, und
einen Kupplungshebel (50), der an entgegengesetzten Endabschnitten des Schaftelements (40) montiert und zur Drehbedienung in der Lage ist, mit einem rechten Passabschnitt (53) und einem linken Passabschnitt (54),
wobei der rechte Endabschnitt (41) und der linke Endabschnitt (42) in den rechten Passabschnitt (53) bzw. den linken Passabschnitt (54) eingepasst sind,
wobei das Schaftelement (40) zum Bedienen des Schaltmechanismus durch eine Drehbedienung des Kupplungshebels (50) um die Schaftmittelachse drehbar ist;
eins Schraube (T), die in einen der Passabschnitte (53) eindringt und mit einem der Endabschnitte (41) in Gewindeeingriff steht,
wobei eine Außenumfangsfläche des rechten Endabschnitts (41, 41A, 41B) flache Oberflächen (41A, 41B) aufweist, die in entgegengesetzte Richtungen weisen, und eine Außenumfangsfläche des linken Endabschnitts (42) flache Oberflächen (42A, 42B) aufweist, die in entgegengesetzte Richtungen weisen, derart dass der rechte Endabschnitt und der linke Endabschnitt, von einer Seite aus gesehen, eine im Allgemeinen nicht kreisförmige Form aufweisen, beide Endteile in eine komplementäre Form der jeweiligen Passteile (53) und (54) eingreifen,
**dadurch gekennzeichnet, dass**
das Befestigungselement (T) sich in einer Richtung senkrecht zur Mittelachse (O) des Schaftelements (40) erstreckt und mit dem Endabschnitt (41) des Schaftelements (40) in Gewindeeingriff steht und den Schaftabschnitt und den Passabschnitt in einer Richtung senkrecht zur Mittelachse (O) des Schaftelements zusammendrückt und dadurch fest zusammenhält.

## Revendications

1. Moulinet de pêche (100), comprenant :
une bobine (3) supportée par un corps de moulinet (1) pour enrouler une ligne de pêche sur celle-ci, et un mécanisme de commutation (30) pour commuter entre l'état dans lequel la rotation de l'arbre de bobine (3a) est limitée et l'état dans lequel la rotation de l'axe de bobine (3a) est autorisée, le mécanisme de commutation comprenant :
un élément d'arbre (40) s'étendant dans une direction gauche-droite et supporté par le corps de bobine (1) de manière à pouvoir tourner autour d'un axe central d'élément d'arbre (0), l'élément d'arbre (40) ayant une partie d'extrémité droite (41) et une partie d'extrémité gauche (42) qui font toutes les deux saillie plus loin que le corps de moulinet (1), dans la direction gauche-droite, et
un levier d'embrayage (50) monté sur des parties d'extrémité opposées de l'élément d'arbre (40) et capable de fonctionner en rotation, ayant une partie de raccord droite (53) et une partie de raccord gauche (54), dans lequel la partie d'extrémité droite (41) et la partie d'extrémité gauche (42) sont raccordées dans la partie de raccord droite (53) et la partie de raccord gauche (54), respectivement
dans lequel l'élément d'arbre (40) peut tourner autour de l'axe central d'arbre, pour actionner le mécanisme de commutation, par un fonctionnement en rotation du levier d'embrayage (50) ;
une fixation (T) qui pénètre dans l'une des parties de raccord (53), et vient en prise de manière vissée avec l'une des parties d'extrémité (41),
dans lequel une surface périphérique externe de la partie d'extrémité droite (41, 41A, 41B) a des surfaces plates (41A, 41B) orientées dans des directions opposées, et une surface périphérique externe de la partie d'extrémité gauche (42) a des surfaces plates (42A, 42B) orientées dans des directions opposées, de sorte que la partie d'extrémité droite et la partie d'extrémité gauche ont une forme généralement non circulaire en regardant depuis un côté, les deux parties d'extrémité venant en prise dans une forme complémentaire des parties de raccord respectives (53) et (54),
**caractérisé en ce que**
la fixation (T) s'étend dans une direction orthogonale à l'axe central (0) de l'élément d'arbre (40) et vient en prise de manière vissée avec la partie d'extrémité (41) de l'élément d'arbre (40) et serre, en fixant ainsi étroitement ensemble la partie d'arbre et la partie de raccord dans une direction orthogonale à l'axe central d'élément d'arbre (0).
